# EUROPEAN PATENT APPLICATION

(11) **EP 4 459 833 A1**
(43) Date of publication of application: **06.11.2024**
(21) Application number: 24172344.4
(22) Date of filing: 25.04.2024
(51) Int. Cl.: H02J 7/00

(54) **CONTROL CIRCUIT, CONTROL METHOD, AND CHARGER APPLYING SAME**

(30) Priority: 28.04.2023 CN 202310486713
(71) Applicant: Silergy Semiconductor Technology (Hangzhou) Ltd, Zhejiang 310051 (CN)
(72) Inventor: CUI, Pengyu, Hangzhou City, 310051 (CN); CHEN, Lei, Hangzhou City, 310051 (CN)
(74) Representative: Viering, Jentschura & Partner mbB Patent- und Rechtsanwälte

(57) **Abstract**

A control circuit, a control method, and a charger applying the same are provided. A level state of a first pin CC1 or a second pin CC2 at an interface of the charger is configured for determining whether a load device is connected to the charger. When the load device is detected to be connected to the charger, an output voltage of a power supply device is controlled to be not less than a first threshold, and then a load switch is turned on to start charging the load device. When the load device is detected not to be connected to the charger, the load switch is turned off, and then a reference voltage of the output voltage of the power supply device is reduced, so that the output voltage is reduced and the output voltage is maintained at a second threshold. The second threshold is less than the first threshold, thereby reducing the standby power consumption of the charger as a whole.

## Description

### FIELD OF THE INVENTION

This invention relates to the technology field of power electronics, and particularly relates to a control circuit, a control method, as well as a charger applying the same.

### BACKGROUND OF THE INVENTION.

In a traditional power-delivery (PD) fast charger, the protocol chip serves as the control center for managing the output voltage of the charger. The protocol chip dynamically adjusts the output voltage by communicating with load devices (such as phones) , and determines whether the output voltage is active or not by controlling the load switch. When a phone charged by a conventional fast charger is unplugged from the charger, the charger enters a standby mode, and the output voltage (Vout) of the charger remains at a high voltage. Unfortunately, this leads to significant no-load power loss. Chargers are in a no-load state for most of time, and maintain a high no-load voltage for an extended period, this results in unnecessary energy wastage. Therefore, finding an effective method to minimize no-load losses of chargers has become a pressing concern.

### SUMMARY OF THE INVENTION

In light of the aforementioned drawbacks, the present disclosure provides a control method for minimizing the no-load loss of chargers, reducing the standby power consumption of the chargers as a whole.

A first aspect of the present disclosure provides a control method for controlling a charger including a power supply device. The control method includes:
entering a standby mode in response to detecting that a load device is not connected to the charger, and in the standby mode, an output voltage of the power supply device is controlled to be not greater than a second threshold for at least part of duration of the standby mode; and;
entering a charging mode in response to detecting that the load device is connected to the charger, and in the charging mode, the output voltage of the power supply device is controlled to be not less than a first threshold, and the first threshold is greater than the second threshold.

Preferably, the charger further includes a load switch, and the load switch is coupled between an output terminal of the power supply device and the load device, and configured to receive the output voltage and supply a load supply voltage for the load device. The load switch is turned off in the standby mode and turned on in the charging mode.

Preferably, the charger determines whether the load device is connected to the charger by detecting a level state of a first pin or a second pin at an interface of the charger.

Preferably, the charger determines that the load device is connected to the charger when a voltage on the first pin or the second pin is detected to be within a predetermined range.

Preferably, a voltage on the first pin or the second pin when the load device is connected to the charger is less than the voltage on the first pin or the second pin when the load device is not connected to the charger.

Preferably, the charger adjusts a reference voltage representing an expected value of the output voltage of the power supply device, to control the output voltage of the power supply device to be consistent with a voltage threshold represented by the reference voltage.

Preferably, in the standby mode, a reference voltage representing an expected value of the output voltage of the power supply device is decreased to a second reference voltage corresponding to the second threshold and maintained at the second reference voltage, to control the output voltage to be maintained at the second threshold.

Preferably, in the standby mode, a reference voltage representing an expected value of the output voltage of the power supply device is first decreased to a first reference voltage corresponding to the first threshold and maintained at the first reference voltage for a predetermined duration, and then decreased to a second reference voltage corresponding to the second threshold, such that the output voltage is maintained at the first threshold for the predetermined duration and then is decreased to the second threshold.

Preferably, in the charging mode, in response to a request of the load device, the charger adjusts a reference voltage representing an expected value of the output voltage of the power supply device so that the reference voltage is maintained at a third reference voltage corresponding to a third threshold, wherein the third threshold is greater than the first threshold.

A second aspect of the present disclosure provides a control circuit for controlling a charger including a power supply device. The control circuit is configured to:
enter a standby mode in response to detecting that a load device is not connected to the charger, and in the standby mode control an output voltage of the power supply device to be not greater than a second threshold for at least part of a duration of the standby mode;
enter a charging mode in response to detecting that the load device is connected to the charger, and in the charging mode, control the output voltage of the power supply device to be not less than a first threshold, wherein the first threshold is greater than the second threshold.

Preferably, the charger further includes a load switch, and the load switch is coupled between an output terminal of the power supply device and the load device, and configured to receive the output voltage and supply a load supply voltage for the load device; wherein the load switch is turned off in the standby mode and turned on in the charging mode.

Preferably, the charger is configured to determine that the load device is connected to the charger when a voltage on a first pin or a second pin at an interface of the charger is detected to be within a predetermined range.

Preferably, the charger includes a first constant current source coupled to the first pin and a second constant current source coupled to the second pin. When the load device is connected to the charger, a current from the first constant current source or the second constant current source flows through an impedance of the load device to generate a voltage on the first pin or the second pin.

Preferably, when the control circuit is in the standby mode, a reference voltage representing an expected value of the output voltage of the power supply device is decreased to a second reference voltage corresponding to the second threshold and maintained at the second reference voltage, to control the output voltage to be maintained at the second threshold.

Preferably, when the control circuit is in the standby mode, a reference voltage representing an expected value of the output voltage of the power supply device is first decreased to a first reference voltage corresponding to the first threshold and maintained at the first reference voltage for a predetermined duration, and then decreased to a second reference voltage corresponding to the second threshold, such that the output voltage is maintained at the first threshold for the predetermined duration and then is decreased to the second threshold.

Preferably, in the charging mode, in response to a request of the load device, the charger adjusts a reference voltage representing an expected value of the output voltage of the power supply device so that the reference voltage is maintained at a third reference voltage corresponding to a third threshold, wherein the third threshold is greater than the first threshold.

For the control circuit, control method, and charger applying the same of the present disclosure, the level state of the first pin CC1 or the second pin CC2 at the interface of the charger is used for determining whether the load device is connected to the charger. When the load device is detected to be connected to the charger, the reference voltage of the output voltage of the power supply device returns to the first reference voltage, so that the output voltage is not less than the first threshold, and then the load switch is turned on to start charging the load device. When the load device is detected not to be connected to the charger, the load switch is turned off first, and then the reference voltage of the output voltage of the power supply device is reduced, so that the output voltage is reduced to the second threshold and maintained at the second threshold. The second threshold is less than the first threshold, thereby reducing the standby power consumption of the charger as a whole.

### BRIEF DESCRIPTION OF DRAWINGS

In order to further clarify the technical solutions in the embodiments of the present disclosure or the prior art, a brief introduction will be made to the drawings necessary for describing the embodiments or the prior art. Obviously, the drawings described below are merely examples of the present disclosure, and people with ordinary skills in the art can obtain other drawings without creative work based on the provided drawings.
FIG. 1 shows a schematic structural diagram of a charger according to a first embodiment of the present disclosure;
FIG. 2 shows an operating waveform diagram of the charger according to the first embodiment of the present disclosure;
FIG. 3 is a schematic diagram showing connection between the charger and a load device according to the first embodiment of the present disclosure;
FIG. 4 shows an operating waveform diagram of a charger according to a second embodiment of the present disclosure; and
FIG. 5 shows a flowchart illustrating a control method according to the present disclosure.

### DETAILED DESCRIPTION

The following describes the present disclosure based on embodiments, but the present disclosure is not merely limited to these embodiments. The detailed descriptions of the present disclosure in the following elaborate on some specific details. Those skilled in the art can fully understand the present disclosure without the description of more details. Well-known methods, procedures, processes, components and circuits are not described in detail to avoid obscuring the essence of the present disclosure.

In addition, those skilled in the art should understand that the accompanying drawings are only for the purpose of illustration and are not necessarily drawn to scale.

At the same time, it should be understood that "circuit" in the following description refers to a conducting loop formed by at least one component or subcircuit through electrical connection or electromagnetic connection. When a component or a circuit is referred to as being "connected" to another component or the component/circuit is referred to as being "connected" between two nodes, it may be directly coupled or connected to another component, or intervening component(s) may be present. The connection between the components may be physical, logical, or a combination thereof. On the contrary, when a component is referred to as being "directly coupled" or "directly connected" to another component, it is meant that there are no intervening component(s) present therebetween.

Unless otherwise required by the context, the terms "comprise" or "comprising," "include" or "including" and the like used in the whole description herein and throughout the claims should be interpreted as inclusive meaning rather than exclusive or exhaustive meaning. In other words, the terms "comprise" or "comprising," "include" or "including" and the like used in the whole description herein and throughout the claims should be interpreted to mean "including but be not limited to."

In the description of the present disclosure, it should be understood that the terms "first", "second" and the like are only used for the purpose of explanation, and should not be construed as indicating or implying relative importance. Additionally, in the description of the present disclosure, "plural" means two or more unless otherwise specified.

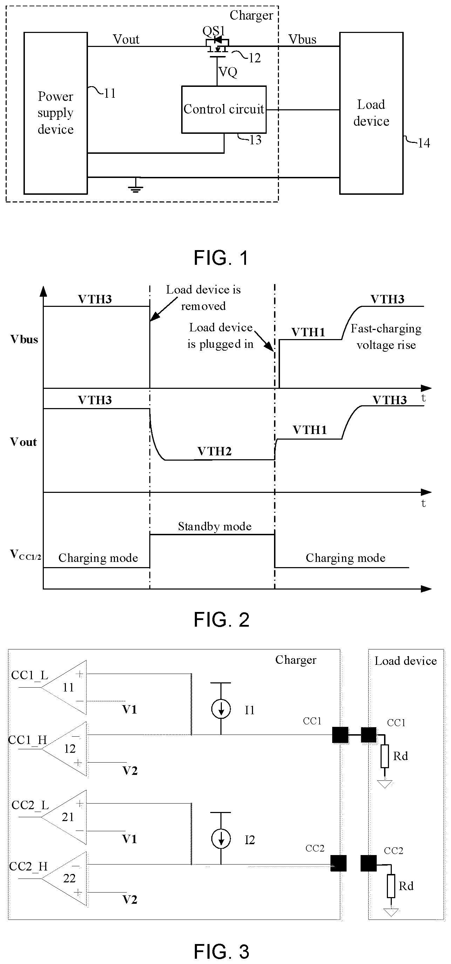

FIG. 1 is a schematic structural diagram of a charger in a first embodiment of the present disclosure. As shown in FIG. 1, the charger of the present disclosure includes a power supply device 11, which can be a switch mode power supply (SMPS) used to power a load device 14. The load device 14 can be any electronic device, such as personal computers, laptops, or mobile devices. The charger includes a control circuit 13. The control circuit 13 performs various control functions associated with the charger. The charger can charge the load device 14 through an interface. The control circuit 13 continuously monitors a level state of the interface to manage power consumption of the charger. In this embodiment, the interface of the charger can support positive and negative insertion. For example, the interface may be a Type-C.

In the present disclosure, the control circuit 13 is configured to: in response to detecting that the load device 14 is not connected to the charger, control the charger to enter a standby mode, and control the output voltage Vout of the power supply device 11 to be not greater than a second threshold VTH2 for at least part of a duration of the standby mode; and in response to detecting that a load device 14 is connected to the charger, control the charger to enter a charging mode, and control the output voltage Vout of the power supply device 11 to be not less than a first threshold VTH1, where the first threshold VTH1 is greater than the second threshold VTH2. In the standby mode, the output voltage Vout of the power supply device 11 is decreased to be not greater than the second threshold VTH2 from a charging voltage, in order to reduce the no-load loss. In the charging mode, the output voltage Vout of the power supply device 11 is increased to be not less than the first threshold VTH1, in order to charge the load device 14. In the embodiments, the control circuit 13 is configured to control the charger to switch the operation mode between the standby mode and the charging mode by determining whether the load device 14 is connected to the charger.

In one embodiment, the charger includes a load switch 12. The load switch 12 is connected between the power supply device 11 and the load device 14. The control circuit 13 is further connected to the load switch 12. An output voltage of the power supply device 11 is Vout, and a load supply voltage providing to the load device 14 is Vbus. The control circuit 13 is configured to generate a drive voltage VG to control the load switch 12 to be turned on and turned off. One terminal of the load switch 12 can receive the output voltage Vout, and the other terminal of the load switch 12 can generate the load supply voltage Vbus. In the standby mode, the load switch 12 is turned off, and load supply voltage Vbus is zero, and the output voltage Vout of the power supply device 11 is decreased to reduce power consumption. In the charging mode, the load switch 12 is turned on, a load supply voltage Vbus is provided to the load device 14.

When the power supply device 11 is an isolated SMPS, typically, a protocol chip on a secondary side of the isolated SMPS serves as a control core for the output voltage Vout. A control chip on a primary side of the isolated SMPS receives a feedback voltage representing the output voltage Vout of the isolated SMPS, and a primary side current of the transformer is adjusted through a power switch, thereby providing a constant output voltage. The feedback voltage is sampled on an output side of the transformer and coupled back to the control chip on the primary side through interface devices such as optocouplers. In one embodiment, the control circuit 13 includes both the control chip on the primary side and the protocol chip on the secondary side.

It should be understood that the load switch 12 can be an independent power switch, or be integrated into other power management devices of the charger. In other embodiments, the control circuit 13 and the load switch 12 are integrated into the power supply device 11. The load switch 12 includes a power transistor QS1.

In the present disclosure, the control circuit 13 is configured to: in response to detecting that the load device 14 is not connected to the charger, turn off the load switch 12 and enter a standby mode, to control the output voltage Vout of the power supply device 11 to be not greater than a second threshold VTH2 for at least part of a standby duration (that is, the duration of the standby mode); and in response to detecting that a load device 14 is connected to the charger, turn on the load switch 12 and enter a charging mode. In the charging mode, the output voltage Vout of the power supply device 11 is configured to be not less than a first threshold VTH1, where the first threshold VTH1 is greater than the second threshold VTH2.

In one embodiment, the charger can include multiple pins connected to the interface. The pins are configured as protocol pins, and the charger can communicate with the load device 14 through the protocol pins to determine the charging voltage and power.

Specifically, the charger determines whether the load device 14 is connected to the charger, to manage the power consumption of the charger by detecting a level state at the pin of the interface of the charger. More specifically, when the charger detects that a voltage on the first pin or the second pin is within a predetermined range, the load device 14 can be determined to be connected to the charger, when the voltage on the first pin or the second pin exceeds the predetermined range, the load device 14 can be determined not to be connected to the charger.

In the embodiment, the type of the first pin is the same as that of the second pin. The first pin can identify when the load device 14 is inserted from the front into the interface, and the second pin can identify when the load device 14 is inserted from the back into the interface. When the first pin is connected the load device 14, the charger can detect the voltage at the first pin, and when the second pin is connected the load device 14, the charger can detect the voltage at the second pin. The charger can detect the voltage at the pin connecting to the load device 14 to determine whether the load device 14 is connected to the charger.

FIG. 3 is a partial schematic diagram showing connection between the charger and the load device in the first embodiment of the present disclosure. It can be seen from FIG. 3 that when the load device 14 is not connected to the charger, the first pin CC1 and the second pin CC2 is in a floating state, and the voltages at the first and second pins are high. When the load device 14 is connected to the charger, the load device 14 itself has an impedance, which is equivalent to providing a several-thousand-ohm resistor Rd between the first pin CC1 and GND, or between the second pin CC2 and GND. The charger can include constant current sources I1 and 12. Constant current sources I1 and I2 in the charger are connected to the first pin CC1 and the second pin CC2, respectively, to keep the voltage on the first pin CC1 and the second pin CC2 within the predetermined range. In a preferred embodiment, the voltage on the first pin CC1 or the second pin CC2 when the load device 14 is connected to the charger is configured to be less than the voltage on the first pin CC1 or the second pin CC2 when the load device 14 is not connected to the charger. For example, as shown in FIG. 3, when the load device 14 is connected to the charger, the voltage on the first pin CC1 or the second pin CC2 is maintained between a first voltage V1 and a second voltage V2, where the second voltage V2 is greater than the first voltage V1. When the load device 14 is not connected to the charger, the voltage on the first pin CC1 or the second pin CC2 can be maintained above second voltage V2. Referring back to FIG. 3, the charger is configured to determine whether the load device 14 is removed or plugged in through two comparators. When the voltage on the first pin CC1 is between the first voltage V1 and the second voltage V2, that is, when a comparison result CC1_L of a comparator 11 and a comparison result CC1_H of a comparator 12 are both high, the load device 14 is determined to be connected to the charger. When the voltage on the second pin CC2 is between the first voltage V1 and the second voltage V2, that is, when a comparison result CC2_L of a comparator 21 and a comparison result CC2_H of a comparator 22 are both high, the load device 14 is determined to be connected to the charger.

It should be understood that, in other embodiments, as long as the charger detects that the voltage on the first pin CC1 or the second pin CC2 is outside the predetermined range, the load device is determined to be disconnected from the charger. For example, the voltage on the first pin CC1 or the second pin CC2 when the load device 14 is connected to the charger is greater than the voltage on the first pin CC1 or the second pin CC2 when the load device 14 is not connected to the charger. In other words, when the load device 14 is not connected to the charger, the voltage on the first pin CC1 or the second pin CC2 can be maintained below the first voltage V1.

It should also be noted that the first pin CC1 and the second pin CC2 are two functionally identical pins, the only difference being that one is used for identifying when the load device 14 is inserted from the front into the interface, and the other is used for identifying when the load device 14 is inserted from the back into the interface.

FIG. 2 shows an operating waveform diagram of the charger according to the first embodiment of the present disclosure. When the charger detects that the voltage on the first pin CC1 or the second pin CC2 is outside the predetermined range, the load device 14 is determined to be disconnected from the charger, at which time, the charger starts to enter the standby mode. In the standby mode, the load switch 12 is turned off, and the charger decreases a reference voltage Vref representing an expected value of the output voltage Vout of the power supply device 11 to a second reference voltage Vref2 corresponding to the second threshold VTH2, then the reference voltage Vref can be maintained at the second reference voltage Vref2, in order to control the output voltage Vout to be maintained at the second threshold VTH2 (e.g., 2.8V), so that the output voltage Vout can be not greater than the second threshold VTH2 in the standby mode. When the charger detects that the voltage on the first pin CC1 or the second pin CC2 is within the predetermined range, the load device 14 is determined to be connected to the charger, at which time, the charger starts to enter the charging mode. In the charging mode, the load switch 12 is turned on, and the charger increases the reference voltage Vref representing the expected value of the output voltage Vout of the power supply device 11 to a first reference voltage Vref1 corresponding to the first threshold VTH1 (e.g., 5V), then the reference voltage Vref can be maintained at the first reference voltage Vref1, in order to control the output voltage Vout to be maintained at the first threshold VTH1.The first threshold VTH1 is greater than the second threshold VTH2. In the charging mode, in response to a request of the load device 14, the charger maintains the reference voltage Vref of the output voltage Vout of the power supply device 11 at a third reference voltage Vref3 corresponding to a third threshold VTH3 (e.g., 9V), to enter a fast-charging mode. The third threshold VTH3 is greater than the first threshold VTH1. In this embodiment, the output voltage Vout can be maintained at the second threshold VTH2 for whole duration of the standby mode.

When the load device 14 is disconnected from the charger, that is, when in a no-load condition, a current I consumed by each chip in the control circuit 13 remains constant. According to the power calculation formula (P=U*I), it can be seen that when an operating voltage U decreases, the no-load power P will also decrease proportionally. Therefore, when the charger is input with a voltage of 230 Vac, no-load loss is large when the charger is utilized the traditional technology to maintain the output voltage at 5V. However, by using the standby control scheme of the present disclosure when the charger is in the standby mode the output voltage drops to 2.8V, and the no-load loss is promisingly reduced to half of that in the traditional technology.

It is known that the charger of the present disclosure determines whether the load device is connected to the charger by detecting the level state of the first pin CC1 or the second pin CC2 at the interface of the charger. When the load device is detected to be connected to the charger, the output voltage of the power supply device is controlled to be not less than the first threshold, and then the load switch is turned on to start charging the load device. When the load device is detected not to be connected to the charger, the load switch is turned off first, and then the reference voltage of the output voltage of the power supply device is reduced and the output voltage is maintained at the second threshold, wherein the second threshold is less than the first threshold, thus reducing the standby power consumption of the charger as a whole.

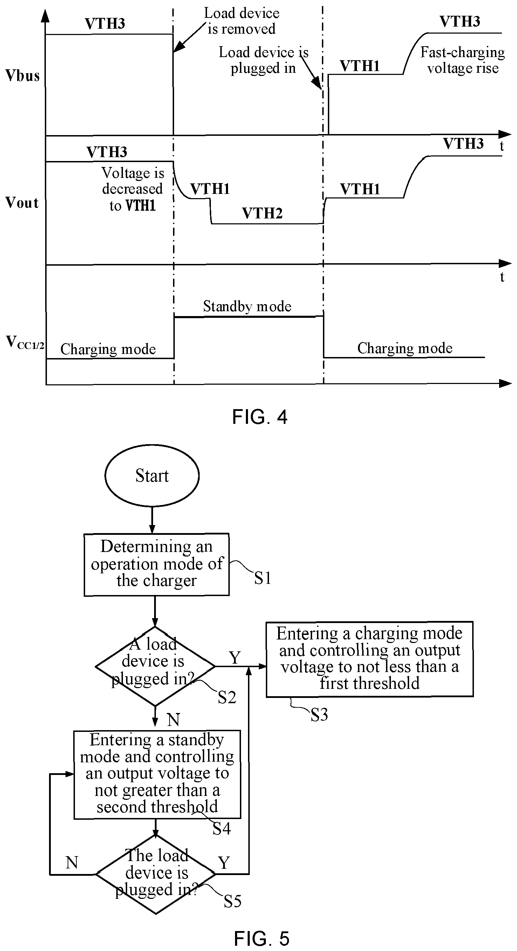

FIG. 4 shows an operating waveform diagram of a charger according to a second embodiment of the present disclosure, which differs from the charger of the first embodiment only in that, in the standby mode, the reference voltage Vref is first reduced to the first reference voltage Vref1 corresponding to the first threshold VTH1 and maintained at the first reference voltage Vref1 for a predetermined duration T, and then reduced to the second reference voltage Vref2 corresponding to the second threshold VTH2,so as to control the output voltage Vout to be maintained at the first threshold VTH1 for the predetermined duration T and then reduced to the second threshold VTH2. The purpose of this is that the output voltage Vout is stepped down from the third threshold VTH3 to the first threshold VTH1 and then to the second threshold VTH2, which allows for a smoother step-down buck process and avoids voltage overshoot. In this embodiment, the output voltage Vout can be maintained at the second threshold VTH2 for part of duration of the standby mode, and in the other parts of the duration of the standby mode, the output voltage Vout can be maintained at the first threshold VTH1.

As shown in FIG. 5, the present disclosure further provides a control method for the charger. The control method includes the following steps.

Step s1: determining an operation mode of the charger. The charger enters a standby mode in response to detecting that a load device is not connected to the charger. The charger enters a charging mode in response to detecting that the load device is connected to the charger.

Step s2: Determining whether a load device is connected to the charger, and in the standby mode, an output voltage of the power supply device is controlled to be not greater than a second threshold for at least part of duration of the standby mode. In this embodiment, whether a load device is connected to the charger can be determined by continuously monitoring a level state of a first pin CC1 or a second pin CC2 of an interface of the charger, when it is detected that a load device is connected to the charger, performing a step s3, and when it is detected that the load device is not connected to the charger, performing a step s4.

Step s3: Entering the charging mode, and in the charging mode controlling an output voltage of a power supply device to not less than a first threshold.

Step s4: Entering the standby mode, and in the standby mode controlling an output voltage of a power supply device to not greater than a second threshold.

Step s5: Continuously determining whether the load device is connected to the charger, when it is detected that a load device is connected to the charger, performing the step s3, and when it is detected that the load device is not connected to the charger, performing the step s4.

The above-mentioned embodiments are merely illustrative of the principle and effects of the present disclosure instead of restricting the scope of the present disclosure. Any person skilled in the art may modify or change the above embodiments without violating the principle of the present disclosure. Therefore, all equivalent modifications or changes made by those who have common knowledge in the art without departing from the spirit and technical concept disclosed by the present disclosure shall be still covered by the claims of the present disclosure.

## Claims

1. A control method, configured to control a charger including a power supply device, wherein the control method comprises:
entering a standby mode in response to detecting that a load device is not connected to the charger, wherein in the standby mode an output voltage of the power supply device is controlled to be not greater than a second threshold for at least part of duration of the standby mode; and
entering a charging mode in response to detecting that the load device is connected to the charger, wherein in the charging mode, the output voltage of the power supply device is controlled to be not less than a first threshold, and the first threshold is greater than the second threshold.

2. The control method according to claim 1, wherein the charger further comprises a load switch, and the load switch is coupled between an output terminal of the power supply device and the load device, and configured to receive the output voltage and supply a load supply voltage for the load device; wherein the load switch is turned off in the standby mode and turned on in the charging mode.

3. The control method according to claim 1, wherein the charger determines whether the load device is connected to the charger by detecting a level state of a first pin or a second pin at an interface of the charger.

4. The control method according to claim 3, wherein the charger determines that the load device is connected to the charger when a voltage on the first pin or the second pin is detected to be within a predetermined range.

5. The control method according to claim 3, wherein a voltage on the first pin or the second pin when the load device is connected to the charger is less than the voltage on the first pin or the second pin when the load device is not connected to the charger.

6. The control method according to claim 1, wherein the charger adjusts a reference voltage representing an expected value of the output voltage of the power supply device, to control the output voltage of the power supply device to be consistent with a voltage threshold represented by the reference voltage.

7. The control method according to claim 1, wherein in the standby mode, a reference voltage representing an expected value of the output voltage of the power supply device is decreased to a second reference voltage and maintained at the second reference voltage corresponding to the second threshold, to control the output voltage to be maintained at the second threshold.

8. The control method according to claim 1, wherein in the standby mode, a reference voltage representing an expected value of the output voltage of the power supply device is first decreased to a first reference voltage corresponding to the first threshold and maintained at the first reference voltage for a predetermined duration, and then decreased to a second reference voltage corresponding to the second threshold, such that the output voltage is maintained at the first threshold for the predetermined duration and then is decreased to the second threshold.

9. The control method according to claim 1, wherein in the charging mode, in response to a request of the load device, the charger adjusts a reference voltage representing an expected value of the output voltage of the power supply device so that the reference voltage is maintained at a third reference voltage corresponding to a third threshold, wherein the third threshold is greater than the first threshold.

10. A control circuit, configured to control a charger including a power supply device, wherein the control circuit is configured to:
enter a standby mode in response to detecting that a load device is not connected to the charger, and in the standby mode control an output voltage of the power supply device to be not greater than a second threshold for at least part of a duration of the standby mode;
enter a charging mode in response to detecting that the load device is connected to the charger, and in the charging mode, control the output voltage of the power supply device to be not less than a first threshold, wherein the first threshold is greater than the second threshold.

11. The control circuit according to claim 10, wherein the charger further comprises a load switch, and the load switch is coupled between an output terminal of the power supply device and the load device, and configured to receive the output voltage and supply a load supply voltage for the load device; wherein the load switch is turned off in the standby mode and turned on in the charging mode.

12. The control circuit according to claim 10, wherein the charger is configured to determine that the load device is connected to the charger when a voltage on a first pin or a second pin at an interface of the charger is detected to be within a predetermined range.

13. The control circuit according to claim 12, wherein the charger comprises:
a first constant current source coupled to the first pin; and
a second constant current source coupled to the second pin; wherein when the load device is connected to the charger, a current from the first constant current source or the second constant current source flows through an impedance of the load device to generate a voltage on the first pin or the second pin.

14. The control circuit according to claim 10, wherein when the control circuit is in the standby mode, a reference voltage representing an expected value of the output voltage of the power supply device is decreased to a second reference voltage and maintained at the second reference voltage corresponding to the second threshold, to control the output voltage to be maintained at the second threshold.

15. The control circuit according to claim 10, wherein when the control circuit is in the standby mode, a reference voltage representing an expected value of the output voltage of the power supply device is first decreased to a first reference voltage corresponding to the first threshold and maintained at the first reference voltage for a predetermined duration, and then decreased to a second reference voltage corresponding to the second threshold, such that the output voltage is maintained at the first threshold for the predetermined duration and then is decreased to the second threshold.

16. The control circuit according to claim 10, wherein in the charging mode, in response to a request of the load device, the charger adjusts a reference voltage representing an expected value of the output voltage of the power supply device so that the reference voltage is maintained at a third reference voltage corresponding to a third threshold, wherein the third threshold is greater than the first threshold.
